# EUROPEAN PATENT SPECIFICATION

(11) **EP 3 274 058 B1**
(45) Date of publication and mention of the grant of the patent: **19.06.2019**
(21) Application number: 15713699.5
(22) Date of filing: 26.03.2015
(51) Int. Cl.: A63B 47/02, A01D 51/00

(54) **COLLECTION CONTAINER, COLLECTION CONTAINER ASSEMBLY, AND COLLECTION DEVICE**
SAMMELBEHÄLTER, SAMMELBEHÄLTERANORDNUNG UND SAMMELVORRICHTUNG
RÉCIPIENT DE COLLECTE, ENSEMBLE RÉCIPIENT DE COLLECTE ET DISPOSITIF DE COLLECTE

(43) Date of publication of application: 31.01.2018
(73) Proprietor: Husqvarna AB, 561 82 Huskvarna (SE)
(72) Inventor: HÄUSSLER, Bruno, 89171 Illerkirchberg (DE); KOHL, Peter, 89267 Illertissen (DE); SCHAFFER, Karin, 89250 Senden (DE)
(74) Representative: Finkele, Rolf
(86) International application number: PCT/EP2015/056625
(87) International publication number: WO 2016/150520

(56) References cited:
- WO-A1-2013/064660
- US-A- 3 026 666
- US-B1- 7 698 882

## Description

The present application is directed to a collection container, collection container assembly, and collection device.

Collecting objects, such as fruit like apples, pears, quinces or nuts, or similar objects from the ground is comparatively cumbersome if done manually.

Therefore, efforts have been made to at least partially ease picking up fruits from the ground. Reference is exemplarily made to EP 2 773 179 A1 which shows a fruit collector having a collecting basket made from a plurality of elastic wires. By moving the container over a fruit lying on the ground, the wires, where the fruits touch the basket are spread apart such that the fruit can enter the container through the basket wall made from the wires. The wires are mounted via axial clamping rings where ends of the wires are mechanically clamped. Adaptation of the basket to a certain constitution of objects, e.g. fruits, to be picked up may be obtained by using a respectively suitable number of wires which is obtained by mounting or dismounting wires to or from the basket. Mounting or dismounting wired to/from the basket, however, is comparatively cumbersome and time consuming.

The elastic wires of the harvesting device shown with US-A-769882 are formed by the wire of a spring that is bend by 180° at the lower end of a collection cylinder. If this device is pressed onto a fruit to be harvested resulting in the wires to move aside. Thus the device will move over the fruit causing the wires to relocate and thus to capture the fruit. To release the thus collected fruits a user can manually lengthen the spring type section which will result in an increase of the distance of the spring's wire. This actions allows the fruits to be released again.

Therefore, it is an object of the invention to provide a collection container, collection container assembly and collection device with improved operability and improved applicability. Particularly, a collection container, collection container assembly and collection device shall be provided, easing adaptation to requirements or needs of different objects.

This object in particular is solved by the features and subject matter of the independent claims. Embodiments in particular also result from respective dependent claims, and also from the description of embodiments as described hereinbelow.

In accordance with an aspect of the invention, embodiments of the invention are directed to a collection container that is configured to and arranged for collecting an object of a certain constitution from the ground, or a similar surface, by passing the object through a penetrable wall section of the collection container.

In accordance with a further aspect of the invention, a collection container assembly may be provided, the collection container assembly comprising a collection container according to any embodiment as described herein.

In accordance with a further aspect of the invention, a collection device may be provided designed for the collection of objects from the ground and comprising a collection container assembly and/or collection container according to any embodiment as described herein.

Embodiments of the collection container, collection container assembly and collection device will be described hereinbelow.

In embodiments, an object intended to be collected by the collection container may for example be selected from the group comprising fruits such as apples, peaches and the like, nuts, balls and similar objects.

In embodiments, the collection container in size and/or configuration may be specifically adapted to respective objects, or range of objects, such as a certain size range, intended to be collected. For example, diameter, axial length, inner volume and other characteristics of the collection container and related elements, may be adapted to respective needs or demands.

The penetrable wall section in embodiments comprises a resilient structure operable to be forced against the object to be collected to thereby induce resilient deformation of the resilient structure and generate a penetration passage, for example in or within the resilient structure, for penetrating or transferring therethrough the object into the container.

For example, the collection container may be pivotably supported by a suitable retaining device, such as a retaining bracket, and be adapted to be rolled over the objects to be collected in a pivoting motion to thereby transfer the objects by elastic deformation of the permeable wall section into the collection container.

The proposed collection container in particular may be characterized by a modifying unit that comprises a modifying mechanism associated with the resilient structure, and designed and operable, for example by a user, to modify the resilience, for example elasticity, the resilient module, spring force, spring module and similar, of the resilient structure.

The modifying mechanism in particular may be designed and configured such that modification of the resilient structure, and thereby adaptation of the collecting container and/or collection characteristics of the collection container may be modified or varied in accordance to the constitution or properties of an object to be or intended to be collected.

As can be seen, by specifically providing the modification unit and associating it with the resilient structure, an operator may, by, for example manually, operating the modification unit, adapt the resilient structure within a certain range to characteristics of the object(s) to be or intended to be collected. Thus handling and operation may be simplified, and the range of application of a collection container may advantageously be broadened.

In embodiments adaptation of the resilience of the resilient structure may comprise to change, alter or adjust elastic or spring forces of the resilient structure, spring tensions, its stiffness, elastic and torsional modules of the resilient structure and similar parameters.

The collection container in embodiments may for example be adapted such that the resilient structure, and thereby the collection container as such, may be, by operating the modifying unit, switched between at least two different collection configurations. Such collection configurations for example may correspond to or be associated with certain characteristics or characteristic parameters of the object or objects intended to be collected. Examples thereof are medium diameter, shape, size, surface structure and surface characteristics of respective object (s) .

In embodiments, the resilient structure may comprise a plurality of resilient components or elements associated with, e.g. fixed to, a supporting structure, such for example an axial hub or a pair of axial hubs, of the collection container. The modifying unit and modifying mechanism in this embodiment may be configured and adapted to modify resilience of, at least a certain or predefined number of, the resilient components or elements.

The modifying unit and mechanism may, in embodiments, be adapted to be coupled with the resilient components, or at least a selected number or group of resilient components. Further, the modifying unit may be adapted and configured such that, by mechanically operating the modifying mechanism the extent of interaction with the resilient components or elements may be altered to thereby modify resilience thereof.

Thus, a comparatively easy, fine and/or precise adjustment of the resilience of the resilient structure may be obtained.

In embodiments, the modifying unit and modifying components may be adapted to and configured for modifying at least one resilient parameter of the resilient structure, preferably of at least one of the, or of at least one of resilient components comprised by the resilient structure. The at least one parameter may be selected from the group comprising: resilient module, spring module, spring stiffness, torsional modulus, mutual distance, curvature, effective axial length, inflexion point(s), bending axis, in particular orientation and/or location thereof.

The mentioned parameters in particular allow adaptation of the characteristics of the collection container to for example different sizes and/or different characteristics, e.g. surface characteristics, of the objects to be or intended to be collected. As an example, modification of at least one of the mentioned parameters may be suitable for adapting the collection container to different types of fruit peels of apples, peaches and the like.

In embodiments, the modifying mechanism may be configured and arranged to mechanically engage, in at least one operational condition, with at least one of the, or with at least one resilient component comprised by the resilient structure.

Providing such a mechanical coupling or engagement between modifying mechanism and resilient structure may be designed in a mechanically comparatively robust and reliably way, and thus may greatly support operational reliability and durability.

In embodiments, the penetrable wall section may comprise, as the resilient structure or resilient components, a plurality of mutually spaced, resilient wire straps. In embodiments, directly neighbouring wire straps may be aligned approximately parallel to each other, for example along an convex and/or ellipsoid envelope defined or defining the collection container.

The wire straps may be made from an elastic material, and comprise or be made from at least one of plastic and metal. The wire straps may for example be made entirely from plastics or metal, or may be made as a compound structure involving both plastic and metal. Such materials, specifically plastics, may be provided and are available over a comparatively large range of different resiliences, and design and structure may be adapted in a comparatively easy way, for example by using injection moulding techniques.

In embodiments, the modifying mechanism may comprise at least one finger that is movably attached to or associated with the collection container. The finger may be operable, for modifying resilience, to engage or disengage a gap formed in the resilient structure. For example, in case that the resilient structure comprises a plurality of resilient components or elements, in accordance with embodiments as proposed herein, the finger may be adapted and configured to be operated to engage and disengage a gap formed or present between, for example two, directly neighbouring resilient components.

Such fingers in embodiments may for example be provided for each gap formed between any of two neighbouring resilient components, such as two neighbouring wire straps.

In alternative embodiments, the number of fingers may be lower or higher than the number of gaps provided in the resilient structure. For example, the number of fingers may be selected such that engagement with every second, third and so on gap is possible. In another example, different fingers may be provided for a single gap, wherein the different fingers may differ from each other in their geometric dimensions and/or material properties, such as elasticity, and thus a configuration having more fingers than gaps may be obtained.

In embodiments the modifying mechanism may be configured and adapted such that the fingers can cooperatively be engaged or disengaged, e.g. inserted or removed from, the gaps, for example meaning that all of the fingers may be engaged/disengaged with the gaps in a single operation.

In further embodiments, the fingers may be configured and adapted such that each single finger or one or several predefined groups of fingers can be engaged or disengaged with the resilient structure in a single operation. In such embodiments, a mechanism for grouping together several fingers to form a group that can individually or separately be operated or handled may be provided.

In further embodiments, the fingers may be adapted and associated with the collecting container in such a way that they are operable, while engaging the gaps, for example a gap between directly adjacent resilient components, to be moved in lengthwise direction of respective gap(s). In this way, a buffering effect of the fingers, for example dependent on the degree of filling of the gap, may be varied to thereby modify resilience of the resilient structure. The fingers may for example be V-shaped or wedge shaped, preferably such that, in the fully engaged state or configuration, the fingers, at for example two opposing sides, abut respective edges, for example defined by wire straps, of corresponding gaps.

As may be inferred from the above description, the provision of fingers as described in respective embodiments may lead to a modifying unit and modifying mechanism of excellent operability, while enabling a broad variety of different types of how to modify resilience of the resilient structure or resilience of the resilient components or elements.

In embodiments, the collection container may have a rotationally symmetric overall shape. For example, the collection container may have an ellipsoidal shape, preferably in the shape of a truncated ellipsoid. In embodiments, in which the collection container comprises a rotationally symmetric overall shape, the resilient structure may extend, for example as a wrap-around-type envelope, in circumferential direction with respect to the axis of rotation of the collection container. In such embodiments, it may further be provided that the resilient structure extends between and is provided between a pair of axial hubs mutually spaced in axial direction of the collection container.

In embodiments such as mentioned and described beforehand but also in other embodiments, the collection container may be operated by rolling it over the ground to thereby urge the resilient structure against the objects to be collected, which in turn may cause, by interaction of the objects with the resilient structure, the resilient structure or resilient components to bend or spread apart to thereby generate a penetration or collection opening suitable for passing through the object. After having passed through and of no further obstacles prevail, the object is enclosed within the container in tat the penetration opening closes again by resilient restoring forces of the resilient structure.

In embodiments, the modifying unit may comprise, with respect to the axis of rotation of the collection container, or with respect to an axis of symmetry of the collection container about which the collection container may be rotated to thereby collect objects in a rolling motion, an annular collar supported moveable in axial direction by one of the axial hubs or an axial hub provided on axial ends of the collection container. The annular collar in embodiments may be operable to enable modification of resilience of the resilient structure by axial displacement, e.g. an axial displacement movement, of the collar.

In embodiments, such a collar may carry or provide the fingers in such a way that, by axial movement of the collar, the fingers can be engaged or disengaged with (the) gaps formed in the resilient structure. For example, the collar may be provided, at least in parts, outside of the collection volume of the collection container such that a movement of the collar in a direction from the outside towards the inside of the collection container causes the fingers to engage the gaps or resilient structure, such as wire straps, whilst a reverse movement, i.e. movement in a direction from the inside towards the outside, causes the fingers to disengage the gaps or resilient structure.

It shall be noted, that the movement-engagement relationship as described beforehand may be reversed, meaning that the collar may be adapted to engage the resilient structure in a movement directed from the inside towards the outside.

In addition, a back-and-forth or bidirectional mechanism may be provided, allowing engagement of different types of fingers depending on the direction of movement, wherein an intermediate non-engagement configuration may be provided. This in particular may mean that by a movement towards the inside of the collection container a first set of fingers may be engaged with the resilient structure, whilst, by a movement towards the outside of the collection container, preferably beyond an intermediate idle or non-engagement position, a second set of fingers may be engaged with the resilient structure.

Using a collar as described in connection with the embodiments mentioned above, modification of the resilient structure can be implemented in a comparatively user-friendly and easily manageable way.

In embodiments comprising, in connection with the modifying structure, at least one finger for engaging a gap in the resilient structure, the at least one finger may be implemented as an axial projection of an or the annular collar of the modification unit, wherein the finger may be directed towards a corresponding gap of or in the resilient structure such that it may engage a gap of the resilient structure, formed between directly neighbouring resilient components. Such axial fingers may, for example, be advantageously used in connection with a modifying unit having a collar, for example an annular collar provided concentrically with the pivot axis or hub, moveably back and forth in axial direction.

In embodiments, the annular collar may be provided to be slidably supported on an annular bearing ring associated with the axial hub. For example, the annular bearing ring and collar may be provided and implemented concentrically to each other and, respectively, concentrically to the pivot axis of the collection container and hub. Using such a bearing ring may ease handling and operability of the modifying unit.

In embodiments, the annular bearing ring may comprise a latching structure interacting with a counterpart latching structure of the annular collar. The latching structure in embodiments may be implemented to provide at least two latching positions for latching the annular collar in at least two different axial positions.

The axial positions may differ in the degree of modification of resilience of the resilient structure. The latter in particular may mean, that, by moving the collar from one latching position to the other, effective resilience, e.g. resilience of the resilient structure prevailing during ordinary operation of the collection container, may be changed and modified to adopt a different value or quality.

The latching structure and/or counterpart latching structure may comprise corresponding annular radial grooves and annular radial protrusions. Providing such latching elements may be advantageous for reliably setting or adjusting resilience of the resilient structure.

In embodiments, the counterpart latching structure may comprise an axial flange, for example flange-type extension oriented in axial direction, being in axial sliding engagement with the bearing shell. Here, the bearing shell may comprise an annular, axial sliding face on which a counterpart sliding face, e.g. a radial inner face, of the axial flange may be adapted to slide on in axial direction. Providing such a bearing surface may ease operation of the modifying unit, in particular collar.

In embodiments, the axial flange of the counterpart latching structure may comprise at least one annular, circumferential latching ring. The latching ring in embodiments may be implemented at a distal axial end of the axial flange, and further may be operable for latching engagement with a counterpart first latching section of the latching structure. Such a latching ring may provide reliable latching in respective latching sites, and at the same time may be implemented to be easily accessible for being operated, enhancing operability.

In embodiments, the axial flange of the counterpart latching structure may comprise a plurality of clear-cut axial bars, e.g. bars extending in axial direction and limited on both lateral sided, i.e. on both sides relative to the circumferential direction, by cut-outs. The clear-cut axial bars being implemented to interconnect a collar base section of the annular collar with the latching ring.

In embodiments, at least some of the axial bars may comprise on their radial inner faces a latching pattern, such as grooves and/or notches, for latching engagement with a counterpart latching pattern provided with the latching structure of the bearing ring, and designed for providing latching engagement in at least two different axial latching configurations.

The axial bars in connection with the latching ring may be associated with respectively a counterpart latching pattern or configuration, wherein the free-cut structure of the axial bars may be beneficial for establishing and/or removing latching engagement by, for example, providing sufficient flexibility to engage or overcome lathing projections and the like, in particular as compared to non-clear-cut axial flanges.

In embodiments, the annular bearing ring may comprise an inner support ring located at an (axially) inner side and extending along an outer circumference of the hub, and further comprising a plurality of detents extending from the annular support ring in axial direction relative to the rotation axis.

Each detent may project, in a region near the outer circumference of the hub, through a gap formed in the resilient structure, for example a gap formed or established between neighbouring resilient elements, such as wire-straps. Further, each detent may comprise, at its distal end, a hook engaging, i.e. adapted and configured for engagement with, a counterpart catch of the hub to thereby fix or be able to fix the bearing ring to or at the axial inner side of the hub.

The counterpart catch may for example be implemented on or at the hub, such that the support ring can be snap-locked to the hub by engaging the hooks with the catch. The catch may be provided in the form of a radial projection, flange, or a radial groove, and the hook may have a corresponding counterpart shape. Using such a support ring may be advantageous for obtaining a comparatively compact and size-optimized design in the region of the hub, for example in case that the collection container is implemented for collecting objects in a rolling-over motion.

In embodiments in which at least one axial hub is provided with the collection container, at least one of the at least one axial hub may comprise an axial discharge opening and/or spout having, with respect to the axis of rotation, an aperture lying in a transversal plane. In such embodiments, the modifying unit may comprise a further modifying unmechanism, for example implemented as a shutter, adjustable orifice or similar, configured and adapted to be operable to modify the aperture diameter of the aperture of the discharge opening.

In embodiments, the further modifying mechanism may be implemented to modify, such for example synchronously or by synchronous, mechanical coupling, the aperture diameter in accordance with the degree of modification of the resilience of the resilient structure. In such embodiments, both the inlet characteristic of the resilient structure and discharge characteristic of the discharge opening may be adapted according to respective needs of objects intended to be collected.

It shall be noted that operation of the modifying unit and of the further modifying mechanism may be coupled to each other such that modification of the aperture diameter goes along with modification of the resilience and vice versa. However, it is also possible, that the modification units are implemented such that they can be operated independently from each other.

In embodiments related to a collection container assembly, the collection container assembly may comprise a retaining bracket configured to support, in particular pivotably support, a collection container according to at least one of the embodiment described herein.

The retaining bracket in embodiments may comprise an adapter section configured for being releasable coupled to a counterpart adapter section of a handle for manually operating the collection container and collection container assembly.

In embodiments related to a collection device, the collection device may be characterized by a modifying unit configured and arranged for modifying resilience of a resilient structure of the collection container, penetrable for objects to be collected to thereby enable at least in parts adaption of collecting characteristics of the collection container to characteristics of the targeted objects, i.e. objects to be or intended to be collected.

According to an aspect of the invention that may be claimed as well, a hub for a collection container may be provided, which comprises a modifying unit as described in connection with any of the collection container embodiments given herein. Such a hub in embodiments may comprise a modifying unit configured for modifying resilience of a resilient structure of a collection container, the resilient structure being configured for passing through objects by urging the resilient structure, for example in a rolling-over motion, against the objects to thereby generate a penetration opening by resilient deformation of the resilient structure.

A collection device, assembly and container according to any embodiment as described herein may be configured to be manually operated. However, it may in embodiments also be possible to provide an automatic or semi-automatic implementation.

According to an aspect of the invention that may be claimed as well, an object collection system or kit may be provided that comprises at least one collection container according to at least one embodiment as described herein, and optionally at least one retaining bracket according to any embodiment described herein. The system or kit may be adapted such that different types, sizes or shapes of collection containers, for example differing in overall size, shape, strength and/or modifying characteristics of the modifying unit and resilient structure, may be used, for example, with a single or a predefined number retaining bracket(s). Such a kit may in embodiments comprise a number of collection tools having pivotable collection containers configured to be coupled with a respective, for example universal, handle.

In any embodiment described herein, in which a retaining bracket is provided, the retaining bracket according to further embodiments may be implemented to pivotably support or retain the collection container in such a way that the collection container is pivotable around a major axis of rotation. The axis of rotation, or pivot axis may for example coincide with an axis of symmetry, such as an axis of rotational symmetry, of the collecting container. Further, the retaining bracket in embodiments may comprise a hub that is arranged to pivotably retain a stub axle section of a collecting container.

In any embodiment described herein, the collecting container according to further embodiments, may comprise an oblong or prolong structure, i.e. it may have a structure in which a dimension in axial direction, in particular parallel to or coinciding with the pivot axis, is larger than a dimension in transverse, radial direction, or it may have a structure in which the dimension in axial direction is smaller than the dimension in transversal, in particular radial, direction. The specific overall structure may be selected in accordance with characteristics of objects intended to be collected.

In embodiments in which an axial hub is provided, the axial hub may be implemented as an annular hub, or ring hub, or ring segment hub. The annular or ring hub or ring segment hub may in embodiments comprise an annular or ring-shaped or ring-segment shaped bearing surface, which may be a sliding surface. The bearing, for example the sliding surface, may, with respect to a pivot axis be defined by the hub, be implemented as radial surface extending over a circumferential section of the hub. In further embodiments, the hub may be implemented as an integral part of the retaining bracket. Specifically, the hub may be implemented in a one-piece configuration with the bracket.

In embodiments comprising a hub, the retaining bracket and hub may comprise corresponding fixing or mounting interfaces such that the hub and retaining bracket may be fixed, for example detachably fixed, to each other, by, for example, a form-fit connection, a bonded connection, clamping, clamp-locking and/or friction-locking connection.

In embodiments comprising both a bracket and hub, further embodiments may provide that the bracket and hub may be implemented in a one-piece configuration.

In embodiments, the brackets and/or hubs and combinations thereof, may be manufactured from a polymeric material, reinforced polymeric material, from metal, in particular light metals or metal alloys, or polymeric-metal composites.

In embodiments in which a hub is provided, the hub may be embodied to pivotably retain a stub axle section of the collecting container, which stub axle section may project from an axial end of the collection container.

In embodiments, in which a hub is provided, the hub may be embodied to comprise an inner bearing shell, bearing surface, and/or sliding surface configured to interact with an outer counter bearing shell, counter bearing surface or outer counter sliding surface of the or a stub axle section of the hub.

In embodiments in which at least one axial hub and/or spout comprises a discharge opening, the aperture diameter thereof may be such or may be modified such that, for example with respect to average or ordinary mean sizes of the type of objects to be collected, only one object at a time can pass the aperture. Such a configuration for example has turned out to be efficient for the collection of objects such as apples, or peaches or pears, for discharging them from the collecting container.

In embodiments in which an axial spout is provided, the spout may be embodied such that a direction and orientation of an open end of the spout facing away from the collection container and defining a type of collection discharge opening can be altered in a rotating and/or swivelling movement of the spout or a moveable section thereof. In particular in such embodiments, the spout may be implemented to be operated as the further modifying mechanism, configured to modify the opening width or discharge diameter of the axial discharge aperture.

In embodiments comprising an axial spout, the spout may be embodied to extend from the axial hub or bracket in accordance with a shape like a pipe bend or pipe elbow or pipe turn. The spout may have a collection mouth, emptying opening, or spout opening, in particular an opening facing away from the hub or bracket, that is inclined relative to the pivot axis defined by the hub, for example such that the opening faces upwards in the collecting operational mode of the bracket or hub. An angle of inclination in counter-clockwise sense between the pivot axis and the opening plane may be in the range between 25 and 60 degrees, or in the range between 30 and 40 degrees, or in the range of about 35 degrees. In embodiments, the spout may be adapted such that the angle of inclination can be modified to thereby be, for example, able to modify the aperture diameter.

In embodiments, in which the resilient structure comprises resilient wire straps, the wire straps may be implemented to have a diameter in the range between 1.0mm to 1.5mm, or 1.1mm to 1.4mm, or 1.25mm to 1.3mm. Such diameters have turned out to have sufficient bendability and at the same time sufficient flexibility to allow collecting of for example fruit objects without significantly injuring the skin of the collected fruits.

In embodiments in which a retaining bracket is provided, the retaining bracket may be embodied to comprise a first and second arm extending from a common base section and implemented to support axial end sections, such as stub axle sections, of the collection container. The arms may be formed as arcuate sections of the retaining bracket, for example extending symmetrically from the common base section. The arms may in embodiments form a continuous, such as U-shaped, component of the retaining bracket. The arms may be made from plastic, in particular reinforced plastic and/or metal-plastic composites.

Below, exemplary embodiments of the invention will be described in connection with the annexed figures, in which
- FIG. 1: shows a collection container assembly in a first operational configuration;
- FIG. 2: shows the collection container assembly in a second operational configuration;
- FIG. 3: shows a detail of the collection container assembly in the first operational configuration;
- FIG. 4: shows a detail of the collection container assembly in the second operational configuration;
- FIG. 5: shows an enlarged section in a partial sectional view of the collection container assembly in the first operational configuration;
- FIG. 6: shows an enlarged section in a partial sectional view of the collection container assembly in the second operational configuration;
- FIG. 7: shows a side view of a collection assembly for illustrating ordinary operation; and
- FIG. 8: shows a perspective view of the collection assembly of FIG. 7.

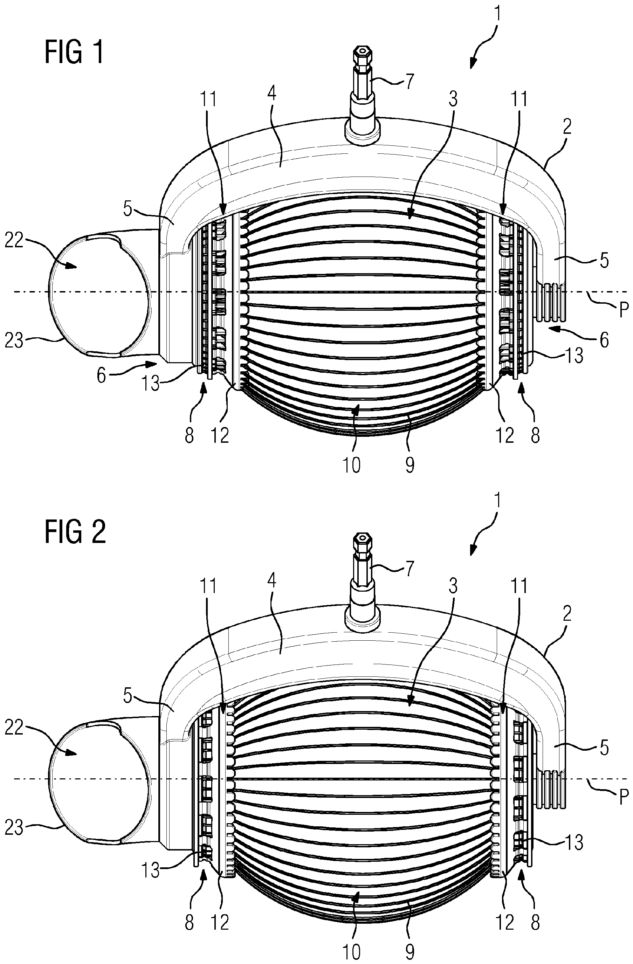

FIG. 1 shows a collection container assembly 1 in a first operational configuration, and FIG. 2 shows the collection container assembly in a second operational configuration. The collection assembly 1 in the embodiment shown is adapted for the collection of objects, such as fruits like apples and the like, but also for the collection of other objects of similar shape such as for example nuts, balls, and the like.

As can be inferred for example from FIG. 1 and FIG. 2, the collection container assembly 1 in embodiments may comprise a retaining bracket 2 and a collection container 3.

The retaining bracket 2 may be of a C-shaped configuration having a base section 4 and a pair of retaining arms 5 projecting therefrom. The retaining bracket 3 may be in the form and configuration of a wheel fork adapted to pivotably retain the collection container 3 at axial hub sections 6 thereof.

The retaining arms 5 may comprise at their free ends bearing shells respectively designed and configured to accommodate and retain corresponding stub axle sections of the collection container 3, such that the collection container 3 is able to be rotated around a pivot axis P (cf. FIG. 1) defined by the bearing shells and stub axle sections.

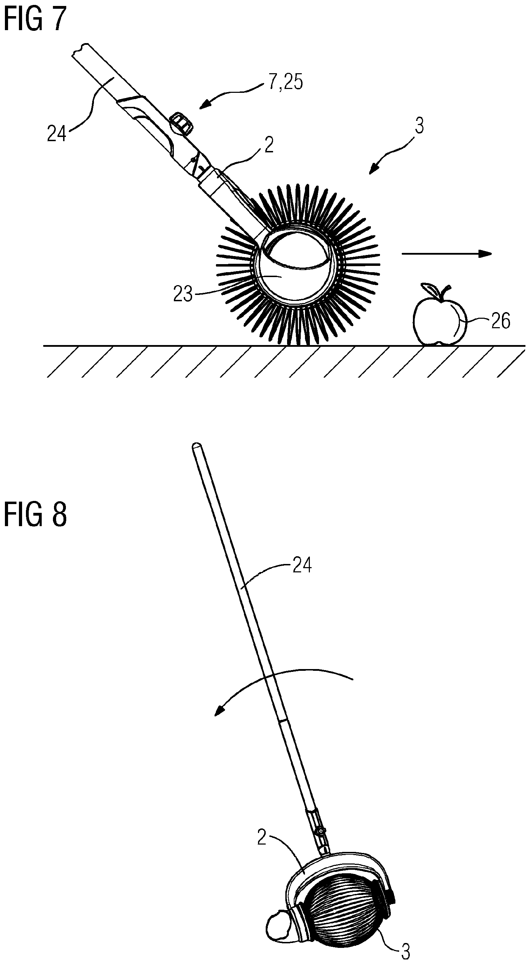

The retaining bracket 3, as shown in the exemplary embodiments in FIG. 1 and FIG. 2, may comprise at a site averted from the retaining arms 5 an adapter section 7. The adapter section 7 may be provided and adapted to be coupled with a counterpart adapter of a handle (cf. 24 in FIG. 8) or handle bar enabling manual operation of the collection assembly 1.

As is indicated in and can be inferred from FIG. 1 and FIG. 2, the collection container 3 may be implemented, relative to the pivot axis P as a rotationally symmetric container, basket or cage. As shown in the example, the collection container 3 may be implemented or formed as a truncated ellipsoid.

According to the exemplary embodiment shown in FIG. 1 and Fig. 2, the collection container 3 may comprise at each axial end a hub 8, for example of circular configuration. The collection container 2 may further comprise a plurality of wire straps 9, or wire-shaped or wire-type bars or filaments, for example made from metal or plastic. The wire straps 9 may be fixed or established, at their distal ends, at the hubs 8, wherein, distributed in circumferential direction of the hub 8, the ends of the wire straps 9 may be fixed, mutually spaced apart, to the hubs 8. In this configuration, a circumferential envelope of mutually spaced wire straps 9 respectively extending between the hubs 8 may be obtained and established. The wire straps 9 may be configured to define a circumferential, rotationally symmetrical collection volume or envelope of the collection container 3.

Neighbouring wire straps 9 may be spaced from each other such that a gap 10 is established therebetween. In view of the arrangement of the wire straps 9 in accordance with the present embodiment, the gaps 10 have a shape comparable to an ellipsoid lune.

In accordance with the embodiment as shown in FIG. 1 and FIG. 2, the collection container 3 may be clamped between the retaining arms 5, and/or the wire straps 9 may shaped, for example in a bent configuration, such that the collection container 3 has an overall convex shape.

In accordance with the embodiment shown in the figures, the wire straps 9 may be implemented and fixed or established at the hubs 8 such that they can be resiliently deformed at least in circumferential direction. Thus, adjacent wire straps 9, or a group of adjacent wire straps 9, may be deformed with respect to a radial plane intersecting the centre of one of the gaps 10 in opposite circumferential directions such that the width of the respective gap 10 in circumferential direction gets enlarged.

In connection with such deformation of the resilient structure defined by the wire straps 9, the collection container 3 may be operated to collect objects from the ground by rolling the collection container 3 over an object to be collected. In doing so, the resilient structure 9 will be urged against the object which in turn may lead to a deformation and broadening of an abutting gap 10 as described beforehand to thereby enlarge the gap 10 and generate a penetration opening suitable for penetrating through the object.

After having passed through the penetration opening, the resilient structure, in particular a respective gap, may return, by the action of restoring forces of the resilient structure, to the non-deformed configuration to thereby enclose the object within the collection container 3. A more detailed description of the operation of the collection container will be given further below.

As can be seen, the resilient structure defined by the wire straps 9 defines a penetrable wall section of the collection container 3, enabling objects, such as fruits, to be collected by resilient deformation of the resilient structure to generate the penetration opening or passage for penetrating therethrough the object to be collected.

The collection container 3 according to the embodiments shown in the figures further may comprise a modifying unit comprising a modifying mechanism 11 associated with the resilient structure, presently the wire straps 9 of the resilient structure, and operable, by manual user action, to modify resilience of the resilient structure, specifically resilience of the wire straps 9.

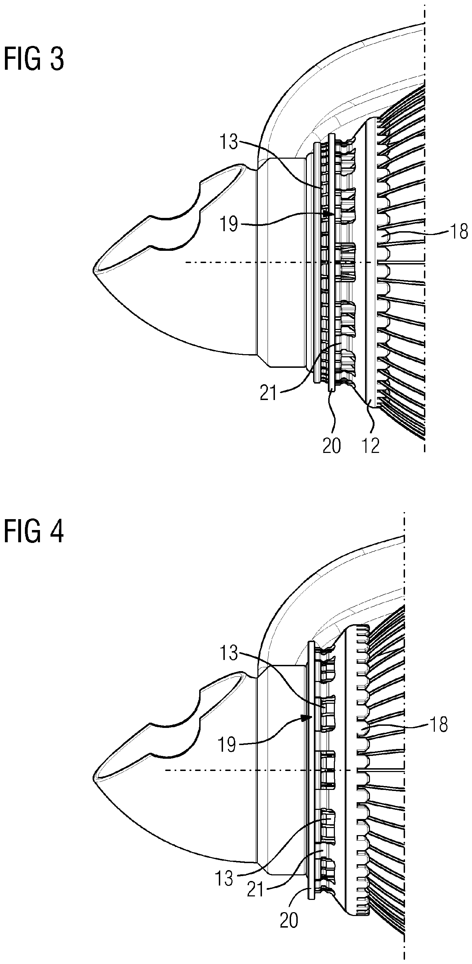

The modifying unit and modifying mechanism 11 as shown in the exemplary embodiment in FIG. 1 and FIG. 2 will now be described in detail with reference to figures 3 to 6, respectively showing details and enlarged views of the collection container assembly 1 in the first and second operational configurations, wherein the first operational configuration corresponds to a first resilient condition of the resilient structure, and the second operational configuration corresponds to a second resilient condition of the resilient structure, differing from each other in the degree of modification of the resilience of the resilient structure, specifically resilience of the wire straps 9.

The modifying unit in the present embodiment provides at each axial side of the collection container 3 a modifying mechanism 11. Each modifying mechanism 11 comprises, in accordance with the enclosed figures, with respect to the pivot axis P, an annular collar 12 which is moveably supported on an annular bearing ring 13 associated with, in the present case by a snap-fit connection to, a respective hub 8.

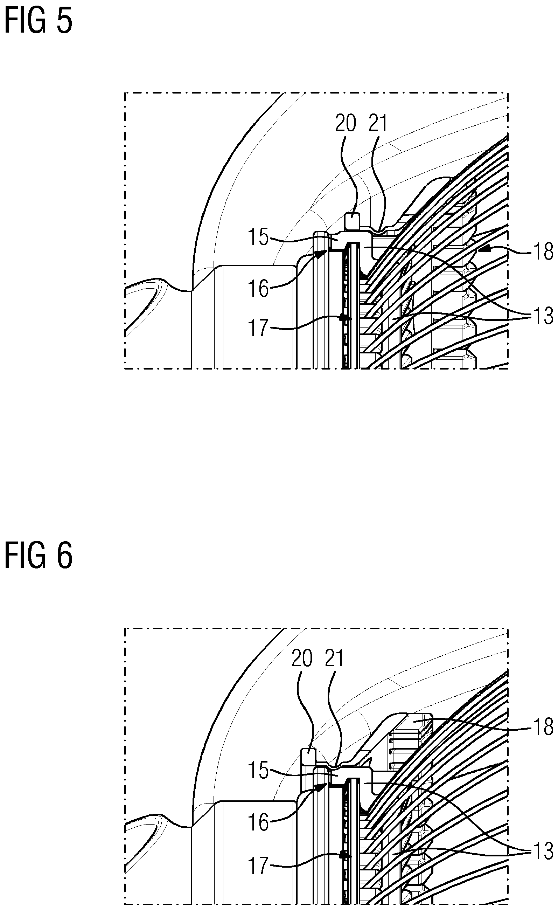

The annular bearing ring 13 in the embodiment shown in the figures comprises an annular inner support ring 14 (cf. FIG. 5, FIG. 6) which is located at an axial inner side of and extending along a radially outer circumference of the hub 8. Further, the annular bearing ring 13 comprises a plurality of detents 15 (cf. FIG. 5, FIG. 6) extending from the inner support ring 14 in axial direction relative to the rotation axis P.

Specifically, and in accordance with the present embodiment, the number of detents 15 may correspond to the number of gaps 10 formed between the wire straps 9. Further, each detent 15 according to the present embodiment projects, in a region near the outer circumference of the hub 8, in axial direction through a respective gap 10, in a direction from the inner of the collection container 3 towards the outside thereof.

Further, each detent 15 comprises at its distal end a hook 16 engaging a counterpart catch in the form of an annular projection 17 (cf. FIG. 5, FIG. 6) formed on the hub 8, to thereby fix the annular bearing ring 13 at and with respect to the axial inner side of the hub 8.

As can in particular be seen from FIG. 3 to FIG. 6, the annular collar 12 is slidably supported on the annular bearing ring 13, wherein the annular bearing ring 13, in accordance with the exemplary embodiment, may comprise a latching structure implemented as, for example, one or more, e.g. annular, elevations and/or one or more depressions. The latching structure may be provided in such a way on an radially outer circumference of the annular bearing ring 13, more specifically on or at the detents 15, such that it can interact with a corresponding counterpart latching structure of the annular collar 12 that is slidably supported thereon. The counterpart latching structure may comprise counterpart depressions and/or elevations in accordance to the design of the corresponding latching structure such that a locking/latching engagement between the annular collar 12 and annular bearing ring 13, in particular comprising annular guiding faces, can be obtained.

The latching structure and counterpart latching structure may be implemented such that, as in the present embodiment, two latching or locking positions in axial direction are provided for latching the annular collar 12 in at least two different axial positions.

In embodiments, such as shown in the figures, the counterpart latching structure may comprise an axial flange 19 implemented as an axial extension of the annular collar 12. The axial flange 19 may, as shown in FIG. 3 to FIG. 6, be in axial sliding engagement with the bearing ring 13.

The flange 19, in accordance with the present embodiment, may comprise an annular, circumferential latching ring 20 which may be implemented at an axially distal end of the flange 19 and operable for latching engagement with a counterpart first latching section of the latching structure (cf. FIG. 5). The first latching structure may be any of a depression or elevation provided on or at the annular bearing ring 13.

The axial flange 19 may, in accordance with the present exemplary embodiment, further comprise a plurality of clear-cut axial bars 21 interconnecting between the latching ring 20 and a collar base section of the annular collar 12.

The axial bars 21 may comprise on their radial inner faces directed towards the annular bearing ring 13 a latching pattern, such as for example grooves and/or notches, for latching engagement with a counterpart latching pattern provided on or at the latching structure of the bearing ring 13.

The latching ring 20 and axial bars 21, and corresponding latching elements or latching structures, are designed for providing latching engagement between the annular collar 12 and the bearing ring 13 in respectively at least one, optionally in at least two different axial latching positions and configurations relative to the axial direction.

In one of the axial latching positions, the annular collar 12 is located or pushed towards the wire straps 9 (cf. FIG. 1, FIG. 3, FIG. 5), such that fingers 18 provided on the annular collar 12 and projecting in axial direction engage into the gaps 10 formed between the wire straps 9. Specifically, for each gap 10, the annular collar may comprise one finger 18, such that in the configuration engaging the resilient structure, each gap 10 is occupied by a respective finger 18. A width of the finger 18 in circumferential direction may be such that in the engaged configuration, the fingers 18 laterally, i.e. in circumferential direction, abut with the wire straps 9 to thereby confine deformation or bendability in circumferential direction, and to shift, for example, a torsional axis of the wire straps 9 from the region of the hubs 8 towards the axial centre of the collection container 3 to thereby enlarge the overall torsional resistance of the wire straps 9 in circumferential direction.

In the other one of the axial latching positions, the annular collar 12 is retracted from the wire straps 9 (cf. FIG. 2, FIG. 4, FIG. 6), such that the fingers 18 are retracted from the gaps 10 to thereby disengage and release the wire straps 9. Hence confinement of bendability is suspended, and the wire straps can be deformed as if no annular collar (12) were present. In particular in doing so, the torsional axis of the wire straps 9 may be shifted back to the region of the hubs 8 to thereby reduce the overall torsional resistance of the wire straps 9 in circumferential direction.

Thus in view of the exemplary two latching positions, it can be inferred, that the fingers 18 movably associated with the collection container 3, are operable to modify resilience of the resilient structure, in particular the wire straps 9, by engaging or disengaging the gaps 10 between the wire straps 9.

Therefore, with the proposed embodiment it is possible to modify resilience of the resilient structure in accordance with characteristics of the object(s) to be collected by adequately adjusting and configuring the modifying mechanism 11.

For example, if the size of the objects to be collected decreases, the fingers 18 of the annular collar 18 can engaged into the gaps 10 to thereby raise resilient strength of the wire straps 9 relative to a deformation in circumferential direction.

If, however, the size of the objects to be collected increases, the fingers 18 can be disengaged from the gaps 10 to thereby decrease resilient strength of the wire straps 9, meaning that at least the initial force needed for bending apart wire straps 9 neighbouring a gap 10 abutting the object can be decreased. Thus the overall force needed for generating enlarged gaps can be kept lower as compared to the configuration in which the fingers 18 engage the gaps 10.

In embodiments as shown in the exemplary figures, the collection container 3 may comprise, in connection with at least one of the axial hubs 8 and/or a discharge spout 23, an axial discharge opening 22 having an aperture lying, with respect to the pivot axis P, in a transversal plane. In such embodiments, the modifying unit may additionally comprise a further modifying mechanism configured and adapted to be operable to modify the aperture diameter of the aperture in accordance with the degree of modification of the resilience of the wire straps 9.

The further modifying mechanism may for example be configured as shutter operable to adapt the aperture diameter of the discharge opening 22 to characteristics of the object(s) to be collected, preferably along with and in accordance with modification of the resilience of the resilient structure.

Coming now to the operation of the collection container assembly 1, reference is made to FIG. 7 and FIG. 8, respectively showing a side view and perspective view of a collection assembly 1 or collection device, according to the ordinary operation thereof.

With the collection assembly 1 shown in FIG. 7 and FIG. 8, a handle 24 is provided, having a counterpart adapter section 25 configured to be releasably coupled to the adapter section 7 of the retaining bracket 2. By use of the handle 24, the collection container 3 or collection container assembly 1 can be operated to collect, for example, fruits 26, such as apples or similar objects, from the ground.

Specifically, the collection container 3, which is pivotably held or attached to the retaining bracket 2 may be rolled in a pivoting movement on the ground, which is indicated as a forward movement in FIG. 7 by an arrow pointing to the right hand side of the drawing.

In case that the collection container 3, while being rolled on the ground, reaches an object 26 of sufficient rigidity, such as for example an apple, and the collection container 3 is rolled over the object 26, the object 26 may pass the envelope defined by the circumferential wire straps 9 of the collection container 3 to thereby enter the collection container 3.

For entering the collection container 3, the object 26, upon rolling the collection container 3 over the object 26, will cause a group of neighbouring wire straps 9 of the resilient structure to elastically bend and spread apart such that, by the elastic deformation, one of the gaps 10 is enlarged in circumferential direction such that the object 26 can pass and penetrate through the enlarged gap into the collection container 3. Upon entering the collection container 3, the enlargement of the gap 10 is reversed by restoring forces of the wire straps 9, to thereby enclose the fruit 26 in the collection container 3, of course provided that no other object or obstacle keeps the gap form forming back. In any case, the resilient structure and resilient restoring forces thereof support the transfer of the fruit 26 into the container.

Hence, by rolling the collection container 3 over the object 26, the object 26 is collected into the collection container 3 through the resilient structure by elastic deformation thereof.

As can be seen from FIG. 7 and FIG. 8, the retaining bracket 2, for example at a respective bearing shell, may comprise on an outer side thereof the spout 23. The spout 23 may be in integral design in a one-piece configuration with the retaining bracket 2 in form of a bent pipe end section.

By utilizing the spout 23, it is possible to empty the collection container 3 and discharge the objects 26 collected therein through the spout 23. The collection container 3 may be emptied by twisting (see curved arrow in FIG. 8) the collection assembly 1 such that the spout 23 faces downwards so that objects 26 contained in the collection container 3 can exit via the spout 23 by the action of gravity.

Thus, it is not required to discharge collected objects 26 through wire strap structure 9 of the resilient structure of the collection container 3, and therefore, discharging objects 26 collected in the collection container 3 can be greatly simplified.

In case that a different type or size of fruits shall be collected with the collection device 1, the user may adapt the collection container 3 to respective requirements. For example, resilience of the resilient structure may be modified via the modifying mechanism 11 in that the collection container 3 is transferred, by operating the modifying mechanism 11 from the first to the second operational configuration and vice versa. Thus, comparatively easy adjustment of the collection properties via the modifying unit to adapt resilience of the resilient structure enables multiple purpose utilization of the proposed collection container 3 and collection device 1.

### List of reference numerals

- 1: collection container assembly
- 2: retaining bracket
- 3: collection container
- 4: base section
- 5: retaining arm
- 6: axial hub section
- 7: adapter section
- 8: hub
- 9: wire strap
- 10: gap
- 11: modifying mechanism
- 12: annular collar
- 13: annular bearing ring
- 14: inner support ring
- 15: detent
- 16: hook
- 17: annular projection
- 18: finger
- 19: axial flange
- 20: latching ring
- 21: axial bar
- 22: axial discharge opening
- 23: spout
- 24: handle
- 25: counterpart adapter section
- 26: fruit

- P: pivot axis

## Claims

1. Collection container (3) arranged for collecting an object (26) of a certain constitution from the ground by passing the object (26) through a penetrable wall section (9, 10) of the collection container (3), the penetrable wall section (9, 10) comprising a resilient structure (9) operable to be forced against the object (26) to thereby induce resilient deformation of the resilient structure (9, 10) to generate a penetration passage for penetrating therethrough the object (26) into the collection container (3),
with a modifying unit comprising a modifying mechanism (11) associated with the resilient structure (9), and operable, by a user, to modify the resilience of the resilient structure (9), **characterized by** the modifying mechanism (11) comprising at least one finger (18) movably associated with the collection container (3), and being operable, for modifying resilience, to engage or disengage a gap (10) formed in the resilient structure (9, 10).

2. Collection container (3) according to claim 1, the resilient structure (9) comprising a plurality of resilient components (9) associated with a supporting structure (8) of the collection container (3), the modifying unit and modifying mechanism (11) being configured and adapted to modify resilience of the resilient components (9).

3. Collection container (3) according to claim 2, the modifying unit and modifying mechanism (11) being adapted to and configured for modifying at least one resilient parameter selected from the group comprising: mutual distance, curvature, effective axial length, inflexion point, bending axis, of at least one of the resilient components (9).

4. Collection container (3) according to at least one of claims 2 and 3, wherein the modifying mechanism (11) is configured and arranged to mechanically engage, in at least one operational condition, with at least one of the resilient components (9).

5. Collection container (3) according to at least one of claims 2 to 4, the modifying mechanism (11)is formed between directly neighbouring resilient components (9).

6. Collection container (3) according to at least one of claims 1 to 5, having a rotationally symmetric overall shape, wherein the resilient structure (9, 10) extends, in circumferential direction with respect to the axis of rotation (P), and between a pair of axial hubs (8) mutually spaced in axial direction.

7. Collection container (3) according to claim 6, wherein the modifying unit (11) comprises, with respect to the axis of rotation (P), an annular collar (12) moveably supported in axial direction by one of the axial hubs (8) and operable to modify resilience of the resilient structure (9, 10) by axial displacement of the collar (12).

8. Collection container (3) according to claims 5 and 7, wherein the at least one finger (18) is implemented as an axial projection of the annular collar (12), directed towards a gap (10) such that it is engageable with at least one of the gaps (10) of the resilient structure (9, 10), formed between directly neighbouring resilient components (9).

9. Collection container (3) according to claim 7 or 8, wherein the annular collar (12) is slidably supported on an annular bearing ring (13) associated with the axial hub (8), wherein the annular bearing ring (13) optionally comprises a latching structure interacting with a counterpart latching structure of the annular collar (12), the latching structure optionally providing at least two latching positions for latching the annular collar in at least two different axial positions, the axial positions differing in the degree of modification of resilience of the resilient structure (9, 10).

10. Collection container (3) according to claim 9, the counterpart latching structure comprising an axial flange (19) in axial sliding engagement with the bearing ring (13), the flange (19) optionally comprising at least one annular, circumferential latching ring (20), preferably implemented at a distal axial end of the flange (19), and operable for latching engagement with a counterpart first latching section of the latching structure.

11. Collection container (3) according to at least one of claims 9 or 10, the annular bearing ring (13) comprising an inner support ring (14) located at an axial inner side and extending along an outer circumference of the hub (8), and further comprising a plurality of detents (15) extending from the inner support ring (14) in axial direction relative to the rotation axis (P), wherein each detent (15) projects, in a region near the outer circumference of the hub (8), through a gap (10) formed in the resilient structure (9, 10), and comprises at its distal end a hook (16) engaging a counterpart catch (17) to thereby fix the bearing ring (13) at and with respect to the axial inner side of the hub (8).

12. Collection container (3) according to any of claims 6 to 10, at least one of the axial hubs (8) comprising an axial discharge opening and/or discharge spout (23) having, with respect to the axis of rotation, an aperture lying in a transversal plane, wherein the modifying unit comprises a further modifying mechanism configured and adapted to be operable to modify the aperture diameter of the aperture, preferably in accordance with the degree of modification of the resilience of the resilient structure (9, 10).

13. Collection container assembly (1) comprising a collection container (3) according to at least one of claims 1 to 12, and further comprising a retaining bracket (2) configured to support, in particular pivotably support, the collection container (3), the retaining bracket (2) preferably comprising an adapter section (7) configured for being releasably coupled to a counterpart adapter section of a handle (24) for manually operating the collection container (3).

14. Collection device (1) designed for the collection of objects (26) from the ground, comprising a collection container assembly (1) according to any of claims 1-13, the collection device (1) in particular being **characterized by** a modifying unit configured and arranged for modifying resilience of a resilient structure (9, 10) penetrable for objects (26) to be collected to thereby enable at least in parts adaption of collecting characteristics of the collection container to characteristics of the targeted objects (26).

## Patentansprüche

1. Sammelbehälter (3), der zum Aufnehmen eines Objekts (26) einer bestimmten Beschaffenheit vom Boden ausgelegt ist, indem das Objekt (26) durch einen durchdringbaren Wandabschnitt (9, 10) des Sammelbehälters (3) geführt wird, wobei der durchdringbare Wandabschnitt (9, 10) eine elastische Struktur (9) umfasst, die gegen das Objekt (26) gedrückt werden kann, um dadurch eine elastische Verformung der elastischen Struktur (9, 10) zu bewirken, um einen Durchlasskanal zum Durchdringen des Objekts (26) in den Sammelbehälter (3) zu erzeugen, mit einer Modifikationseinheit, die einen Modifikationsmechanismus (11) umfasst, der der elastischen Struktur (9) zugeordnet ist und von einem Benutzer zum Modifizieren der Elastizität der elastischen Struktur (9) betätigt werden kann, **dadurch gekennzeichnet, dass** der Modifikationsmechanismus (11) mindestens einen Finger (18) umfasst, der dem Sammelbehälter (3) beweglich zugeordnet ist und zum Modifizieren der Belastbarkeit betätigbar ist, um einen in der elastischen Struktur (9, 10) ausgebildeten Spalt (10) ein- oder auszurasten.

2. Sammelbehälter (3) nach Anspruch 1, wobei die elastische Struktur (9) eine Vielzahl von elastischen Komponenten (9) umfasst, die einer Stützstruktur (8) des Sammelbehälters (3) zugeordnet sind, die Modifikationseinheit und der Modifikationsmechanismus (11) konfiguriert und angepasst sind, um die Elastizität der elastischen Komponenten (9) zu verändern.

3. Sammelbehälter (3) nach Anspruch 2, wobei die Modifikationseinheit und der Modifikationsmechanismus (11) angepasst und konfiguriert sind, um mindestens einen elastischen Parameter zu modifizieren, ausgewählt aus der Gruppe umfassend: gegenseitigen Abstand, Krümmung, effektive axiale Länge, Wendepunkt, Biegeachse, von mindestens einer der elastischen Komponenten (9).

4. Sammelbehälter (3) nach mindestens einem der Ansprüche 2 und 3, wobei der Modifikationsmechanismus (11) konfiguriert und angeordnet ist, um in mindestens einem Betriebszustand mechanisch mit mindestens einer der elastischen Komponenten (9) in Eingriff zu gelangen.

5. Sammelbehälter (3) nach mindestens einem der Ansprüche 2 bis 4, wobei der Modifikationsmechanismus (11) zwischen direkt benachbarten elastischen Komponenten (9) ausgebildet ist.

6. Sammelbehälter (3) nach mindestens einem der Ansprüche 1 bis 5 mit einer rotationssymmetrischen Gesamtform, wobei sich die elastische Struktur (9, 10) in Umfangsrichtung in Bezug auf die Rotationsachse (P) und zwischen einem Paar von axialen Naben (8) erstreckt, die in axialer Richtung voneinander beabstandet sind.

7. Sammelbehälter (3) nach Anspruch 6, wobei die Modifikationseinheit (11) in Bezug auf die Rotationsachse (P) einen ringförmigen Bund (12) umfasst, der in axialer Richtung durch eine der axialen Naben (8) beweglich gehalten wird und betreibbar ist, um die Elastizität der elastischen Struktur (9, 10) durch axiale Verschiebung des Bundes (12) zu modifizieren.

8. Sammelbehälter (3) nach den Ansprüchen 5 und 7, wobei der mindestens eine Finger (18) als ein axialer Vorsprung des ringförmigen Bunds (12) ausgebildet ist, der auf einen Spalt (10) gerichtet ist, so dass er mit mindestens einer der Spalten (10) der elastischen Struktur (9, 10), die zwischen direkt benachbarten elastischen Komponenten (9) ausgebildet sind, in Eingriff zu bringen ist.

9. Sammelbehälter (3) nach Anspruch 7 oder 8, wobei der ringförmige Bund (12) verschiebbar auf einem ringförmigen Stützring (13) abgestützt ist, der der axialen Nabe (8) zugeordnet ist, wobei der ringförmige Stützring (13) optional eine Verriegelungsstruktur umfasst, die mit einer Gegenstück-Verriegelungsstruktur des ringförmigen Bundes (12) zusammenwirkt, wobei die Verriegelungsstruktur optional mindestens zwei Verriegelungspositionen zum Verriegeln des ringförmigen Bundes in mindestens zwei verschiedenen axialen Positionen vorsieht, wobei sich die axialen Positionen im Grad der Modifikation der Elastizität der elastischen Struktur (9, 10) unterscheiden.

10. Sammelbehälter (3) nach Anspruch 9, wobei die Gegenstück-Verriegelungsstruktur einen axialen Flansch (19) in axialem gleitendem Eingriff mit dem Stützring (13) umfasst, wobei der Flansch (19) optional mindestens einen ringförmigen, umlaufenden Verriegelungsring (20) umfasst, der vorzugsweise an einem distalen axialen Ende des Flansches (19) ausgebildet ist und für einen Verriegelungseingriff mit einem ersten Verriegelungsabschnitt des Gegenstücks der Verriegelungsstruktur betätigbar ist.

11. Sammelbehälter (3) nach mindestens einem der Ansprüche 9 oder 10, wobei der ringförmige Stützring (13) einen inneren Stützring (14) umfasst, der an einer axialen Innenseite angeordnet ist und sich entlang eines Außenumfangs der Nabe (8) erstreckt, und ferner eine Vielzahl von Rasten (15) umfasst, die sich vom inneren Stützring (14) in axialer Richtung relativ zur Rotationsachse (P) erstrecken, wobei jede Raste (15) in einem Bereich nahe dem Außenumfang der Nabe (8) durch einen in der elastischen Struktur (9, 10) ausgebildeten Spalt (10) ragt und an ihrem distalen Ende einen Haken (16) umfasst, der in eine Gegenstückaufnahme (17) eingreift, um dadurch den Stützring (13) an und in Bezug auf die axiale Innenseite der Nabe (8) zu fixieren.

12. Sammelbehälter (3) nach einem der Ansprüche 6 bis 10, wobei mindestens eine der axialen Naben (8) eine axiale Austrittsöffnung und/oder einen Austrittsstutzen (23) umfasst, der in Bezug auf die Rotationsachse eine in einer transversalen Ebene liegende Öffnung aufweist, wobei die Modifikationseinheit einen weiteren Modifikationsmechanismus umfasst, der konfiguriert und angepasst ist, um den Öffnungsdurchmesser der Öffnung zu modifizieren, vorzugsweise in Übereinstimmung mit dem Grad der Modifikation der Elastizität der elastischen Struktur (9, 10).

13. Sammelbehälteranordnung (1), umfassend einen Sammelbehälter (3) nach mindestens einem der Ansprüche 1 bis 12 und ferner umfassend eine Haltevorrichtung (2), die konfiguriert ist, um den Sammelbehälter (3), insbesondere schwenkbar zu tragen, wobei die Haltevorrichtung (2) vorzugsweise einen Adapterabschnitt (7) umfasst, der konfiguriert ist, um lösbar mit einem Gegenstück-Adapterabschnitt eines Griffs (24) zum manuellen Betätigen des Sammelbehälters (3) verbunden zu werden.

14. Sammelvorrichtung (1), die zum Aufnehmen von Gegenständen (26) vom Boden ausgelegt ist, umfassend eine Sammelbehälteranordnung (1) nach einem der Ansprüche 1-13, wobei die Sammelvorrichtung (1) insbesondere **gekennzeichnet ist durch** eine Modifikationseinheit, die konfiguriert und angeordnet ist, um die Elastizität einer elastischen Struktur (9, 10) zu modifizieren, die für die aufzunehmenden Objekte (26) durchlässig ist, um dadurch zumindest teilweise eine Anpassung der Aufnahmeeigenschaften des Sammelbehälters an die Eigenschaften der Zielobjekte (26) zu ermöglichen.

## Revendications

1. Récipient collecteur (3) agencé pour recueillir un objet (26) d'une certaine constitution à partir du sol en faisant passer l'objet (26) à travers une section de paroi pénétrable (9, 10) du récipient collecteur (3), la section de paroi pénétrable (9, 10) comprenant une structure élastique (9) pouvant être forcée contre l'objet (26) pour induire ainsi une déformation élastique de la structure élastique (9, 10) pour générer un passage de pénétration pour y faire pénétrer l'objet (26) dans le récipient collecteur (3),
avec une unité de modification comprenant un mécanisme de modification (11) associé à la structure élastique (9), et pouvant être actionné, par un utilisateur, pour modifier la résilience de la structure élastique (9),
**caractérisé par**
un mécanisme de modification (11) comprenant au moins un doigt (18) associé de manière mobile au récipient collecteur (3), et pouvant être actionné, pour modifier la résilience, pour engager ou désengager un espace (10) formé dans la structure élastique (9, 10).

2. Récipient collecteur (3) selon la revendication 1, la structure élastique (9) comprenant une pluralité de composants élastiques (9) associés à une structure de support (8) du récipient collecteur (3), l'unité de modification et le mécanisme de modification (11) étant configurés et adaptés pour modifier la résilience des composants élastiques (9).

3. Récipient collecteur (3) selon la revendication 2, l'unité de modification et le mécanisme de modification (11) étant adaptés et configurés pour modifier au moins un paramètre élastique choisi dans le groupe comprenant : distance mutuelle, courbure, longueur axiale effective, point d'inflexion, axe de flexion, d'au moins un des composants élastiques (9).

4. Récipient collecteur (3) selon au moins l'une des revendications 2 et 3, dans lequel le mécanisme de modification (11) est configuré et agencé pour s'engager mécaniquement, dans au moins une condition opérationnelle, avec au moins l'un des composants élastiques (9).

5. Récipient collecteur (3) selon au moins l'une des revendications 2 à 4, le mécanisme de modification (11) est formé entre des composants élastiques (9) directement voisins.

6. Récipient collecteur (3) selon au moins l'une des revendications 1 à 5, ayant une forme d'ensemble symétrique en rotation, dans lequel la structure élastique (9, 10) s'étend, dans la direction circonférentielle par rapport à l'axe de rotation (P), et entre deux moyeux axiaux (8) mutuellement espacés en direction axiale.

7. Récipient collecteur (3) selon la revendication 6, dans lequel l'unité de modification (11) comprend, par rapport à l'axe de rotation (P), un collier annulaire (12) supporté de manière mobile dans la direction axiale par un des moyeux axiaux (8) et pouvant fonctionner pour modifier la résilience de la structure élastique (9, 10) par déplacement axial du collier (12).

8. Récipient collecteur (3) selon les revendications 5 et 7, dans lequel l'au moins un doigt (18) est réalisé sous la forme d'une saillie axiale de la collerette annulaire (12), dirigée vers un espace (10) de telle sorte qu'elle peut venir en prise avec au moins l'une des espaces (10) de la structure élastique (9, 10), formée entre des composants élastiques (9) directement voisins.

9. Récipient collecteur (3) selon la revendication 7 ou 8, dans lequel le collier annulaire (12) est supporté de manière coulissante sur une bague de palier annulaire (13) associée au moyeu axial (8), dans lequel la bague de palier annulaire (13) comprend éventuellement une structure de verrouillage interagissant avec une structure de verrouillage équivalente du collier annulaire (12), la structure de verrouillage fournissant éventuellement au moins deux positions de verrouillage pour le verrouillage du collier annulaire dans au moins deux positions axiales différentes, les positions axiales variant dans le degré de modification du ressort de la structure élastique (9, 10).

10. Récipient collecteur (3) selon la revendication 9, la structure de verrouillage homologue comprenant une bride axiale (19) en prise coulissante axiale avec la bague de roulement (13), la bride (19) comprenant éventuellement au moins une bague de verrouillage annulaire circonférentielle (20), de préférence réalisée à une extrémité axiale distale de la bride (19), et pouvant fonctionner pour une prise de verrouillage avec une première partie de verrouillage homologue de la structure de verrouillage.

11. Récipient collecteur (3) selon au moins l'une des revendications 9 ou 10, la bague de roulement annulaire (13) comprenant une bague de support intérieure (14) située sur un côté intérieur axial et s'étendant le long d'une circonférence extérieure du moyeu (8), et comprenant en outre une pluralité de crans (15) s'étendant depuis la bague de support intérieure (14) en direction axiale relative à l'axe de rotation (P), dans laquelle chaque cran d'arrêt (15) fait saillie, dans une région proche de la circonférence extérieure du moyeu (8), à travers un espace (10) formé dans la structure élastique (9, 10), et comprend à son extrémité distale un crochet (16) engageant un dispositif d'arrêt de contrepartie (17) pour fixer ainsi la bague de palier (13) sur et par rapport au côté interne axial du moyeu (8).

12. Récipient collecteur (3) selon l'une quelconque des revendications 6 à 10, au moins l'un des moyeux axiaux (8) comprenant une ouverture d'évacuation axiale et/ou une goulotte d'évacuation axiale (23) ayant, en regard de l'axe de rotation, une ouverture située dans un plan transversal, dans lequel l'unité de modification comprend un mécanisme de modification supplémentaire configuré et adapté pour être mis en oeuvre pour modifier le diamètre de l'ouverture, de préférence en fonction du degré de modification de la résilience de la structure élastique (9, 10).

13. Ensemble de récipient collecteur (1) comprenant un récipient collecteur (3) selon au moins l'une des revendications 1 à 12, et comprenant en outre un support de retenue (2) configuré pour supporter, en particulier de manière pivotante, le récipient collecteur (3), le support de retenue (2) comprenant de préférence une section adaptateur (7) conçue pour être reliée de manière amovible à une section adaptateur équivalente de poignée (24) pour commander manuellement le récipient collecteur (3).

14. Dispositif de collecte (1) conçu pour la collecte d'objets (26) à partir du sol, comprenant un récipient de collecte tel qu'assemblé (1) selon l'une quelconque des revendications 1-13, le dispositif de collecte (1) en particulier étant **caractérisé par** une unité de modification configurée et agencée pour modifier la résilience d'une structure élastique (9, 10) pénétrable pour objets (26) à collecter pour permettre au moins en partie une adaptation des caractéristiques collectrices du récipient de collecte aux caractéristiques des objets ciblés (26).
